# EUROPEAN PATENT SPECIFICATION

(11) **EP 0 685 049 B1**
(45) Date of publication and mention of the grant of the patent: **25.03.1998**
(21) Application number: 93914926.6
(22) Date of filing: 05.06.1993
(51) Int. Cl.: F16K 5/06, F16K 27/06

(54) **WAFER BALL VALVE OF SYNTHETIC MATERIAL WITH BUILT-IN CORE**
KUGELHAHN VON SYNTHETISCHEM MATERIAL MIT EINGEBAUTEM METALLISCHEN KERN
VANNE A BOISSEAU SPHERIQUE EN MATERIAU SYNTHETIQUE AVEC NOYAU INCORPORE

(30) Priority: 01.02.1993 IT MI930161
(43) Date of publication of application: 06.12.1995
(73) Proprietor: NEGRI FRATELLI S.R.L., I-28075 Grignasco (IT)
(72) Inventor: NEGRI, Guido, I-28075 Grignasco (IT)
(74) Representative: Filippi, Remo
(86) International application number: IT9300057
(87) International publication number: WO9418478

(56) References cited:
- DE-A- 4 124 339
- DE-C- 2 849 779
- US-A- 3 961 770
- Patent Abstracts of Japan, Vol 14, No 266, M-982, 1989-11-07, abstract of JP, 02-76980 (HITACHI METALS LT), 16 March 1990 (16.03.90)

## Description

The presently known wafer type ball valves, of flat structures, have a substantially solid metal body to support the closing part worked by a handle through a pin that connects the ball with the outside.

Said metal body is generally heavy and bulky this being necessary to make the valve strong and functionally reliable.

But the valve must also withstand aggressive agents both from its environment and from the products used in the equipment on which it works and this involves problems of expense since the metal must necessarily be of high quality and therefore costly.

The weight of the valve naturally creates further problems of packing and transport, two more items that contribute to raising its cost.

The patent application DE 41 24 339 A1 refers to a flat valve for a ball type closing part, with a metal body in which the chamber that houses the ball has a plastic lining to ensure a seal and protection against aggressive agents in

the environment and in the products present in the fluids that pass through the valve.

To make up for wear on the lining at the edges of the openings through which the fluid passes, annular packings are disclosed of a hardness greater than that of said lining.

The volume of metal and weight of this valve are considerable. To combat aggressive agents the plastic lining of the chamber has been extended to the sides of the valve all round the openings.

But such an execution would be difficult, costly and short-lived in view of the complexity of said lining.

The patent JP-A-276980 discloses a ball valve with a body in two parts. A first inner part comprises an outer structure of plastic and an inner metal structure that houses the ball.

A second outer part of plastic material is moulded on the first part. The length of this valve is considerable at the aperture for fluids and its structure is complex. It is also bulky and there would be problems of maintenance due to the large number of parts and difficulties of disassembly.

The ratio between said length and thickness in the direction of flow between entry and exit apertures is greater than 1 and this pump could not therefore be used where a flat one is required.

The object of the disclosure solves these problems and offers other important advantages as will be explained below.

The object of the invention is a wafer type ball valve having a flat discoid body and means for combating aggresive agents in the environment and in the products in the fluid that pass through the valve and having a limit stop device for a lever to operate the two open and closed positions, the valve further having the features of the characterizing portion of claim 1.

Embodiments of the valve according to the invention are disclosed in the dependent claims and may comprise the following features.

Said die consists of two matching halves.

The metal core is supported and centered in one of said halves by means of a transversal pin which lies axially in relation to the half die and to the core.

The limit stop device is a metal peg fixed to the top of the valve body and projecting inside a fork, mounted on the shaft of the ball, to which the operating handle is fixed, placed between said top of the valve body and said operating handle.

One of the die halves contains a slot for said peg,fitted with a permanent magnet.

Placed in its slot before molding, said peg projects in a portion of the die shaped so that a suitable hold is made for it when the material is put in. When molding is finished, said peg will be stably fixed into the structure of the valve and will project close to the shaft of the operating handle providing a limit to mark the ends of the open and closed positions of the valve.

Alternatively said peg forms part of the crown-shaped supporting structure obtained by molding, if a suitable impression is provided inside the die.

The parts most exposed to mechanical stress and chemical action, such as the core and the ball, are made of materials generally employed for such types of valves, especially metals. The crown-shaped supporting structure may be made of ferrous or non-ferrous metals, plastic, thermoplastic, thermohardening plastic or other suitable materials. The purpose of this is to reduce manufacturing costs and lessen the weight of the valve without adversely affecting its strength and ability to withstand mechanical and corrosive wear.

The outer cylindrical surface of the core is processed to ensure maximum adhesion between said core and the crown-shaped supporting structure made by molding round the core. Thickness of the substantially discoid metal core is greater than that of the structure created by the molding process, said structure too being virtually discoid.

The position of said core is practically symmetrical in relation to said structure so that, when the valve is installed, the structure's lateral faces, projecting on either side, ensure their direct contact with the flanges on the pipes thus making a strong and reliable connection.

The advantages of the invention will be clearly understood. All parts exposed to mechanical and chemical action are made of metals or, in any case, of materials normally used for the various functions, metals such as steel, stainless steel, brass, aluminium, bronze, cast iron or even others. But as the structural parts connecting the operating parts and the valve itself, comprising core and ball, consist of a crown of synthetic material made lighter by the presence of voids, while the valve provides maximum strength and precision, its cost is considerably less than that of the usual valves both on account of the materials used and of the process by which it is made.

Being so much lighter in weight this valve is also more convenient to pack and transport, as well as to handle and install.

Characteristics and purposes of the invention will be made still clearer by the following example of its execution illustrated by diagrammatically drawn figures.

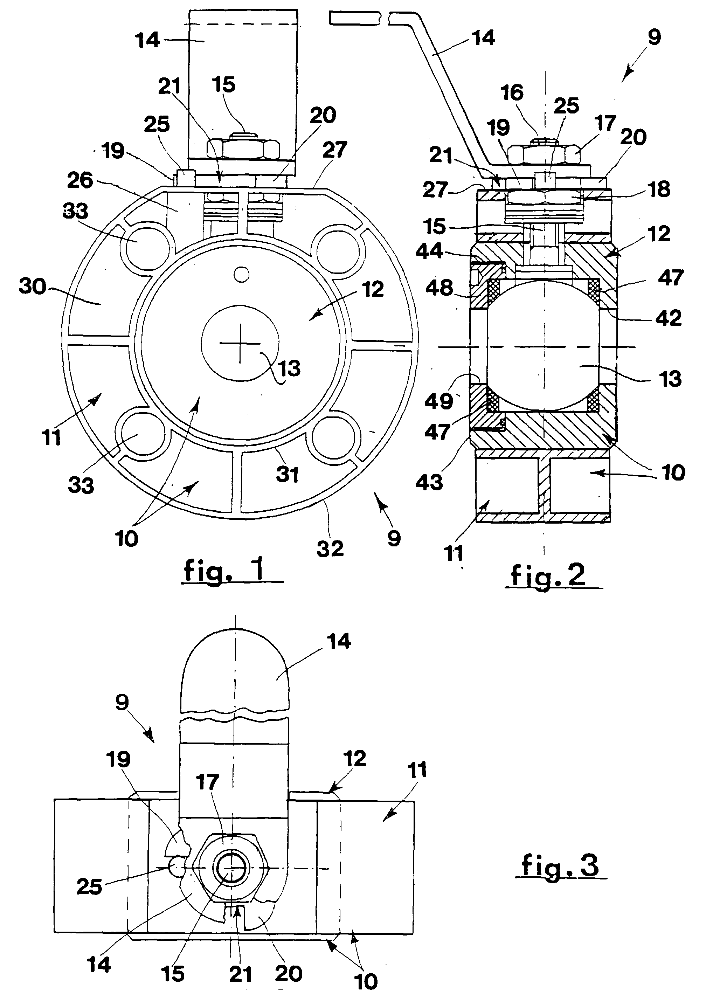

- Fig. 1: The valve subject of this invention, front view.
- Fig. 2: A transversal section of the valve.
- Fig. 3: The valve seen from above.
- Fig. 4: The valve's structure of plastic material, front view.
- Fig. 5: A transversal section of the same structure.
- Fig. 6: A transversal section of the valve core.
- Fig. 7: A front view of the valve core.
- Fig. 8: The valve's body after molding, front view.
- Fig. 9: A transversal section of the valve's body.
- Fig. 10: First half of the die for molding the valve's body, front view.
- Fig. 11: The above seen from the side.
- Fig. 12: The second half of the die, seen from the side.
- Fig. 13: Front view of the second half of the die.

The valve 9 comprises a body 10 consisting of a crown-shaped structure 11 of synthetic material which tightly encloses a metal core 12.

Said core 12 is associated to the structure 11, when the latter is molded, by its being placed in the die before injection of the material.

The central ball 13 is connected to the handle 14 by a pin 15 with threading 16 and nuts 17-18.

Said handle is fixed to the fork 21 whose ends 19,20 at 90° form two stops to limit rotation of the ball 13 and mark the open and closed positions of the valve body 10. The limit stops consist of the metal peg 25 sunk into the volume 26 of the structure and projecting from the top 27 of said structure.

Said structure 11 virtually consists of an annular laminar body 30 that connects the substantially cylindrical coaxial faces 31, 32 and four tubular bodies 33 parallel to the axis, at an equal angular distance, for passage of the bolts or pins connecting them to the flanges on the piping on which said valve 9 is mounted.

The core 12 consists of a cylindrical body having a lateral face 41 in which there is an axial hole 42, and an open face 43 to which, after introduction of the ball 13, the lid 48 with a hole 49 is screwed on by the thread 44. Packing 47 for the ball 13 is placed at the two faces 41, 43 in the chamber created inside the core 12.

The die for molding the structure 11 consists of two halves 50, 51. The first half 50 has in it the impression 52 for one face of the valve structure 11 and devices for expulsion of the valve body 10, the pneumatic cylinder 53 and piston 54 guided by the bushing 55.

The second half 51 of the die contains the impression 56 for the second face of the valve structure 11 and guide pegs 57 to slide in the holes 58 of the die's first half 50. Centrally in the impression 52 of the first die half 50 there is a pin 60 for suspending and centering the valve's metal core 12 inside the die.

In the zone 59 of the die is a slot 61 containing a permanent magnet for holding the metal peg 25 that limits rotation of the handle 14.

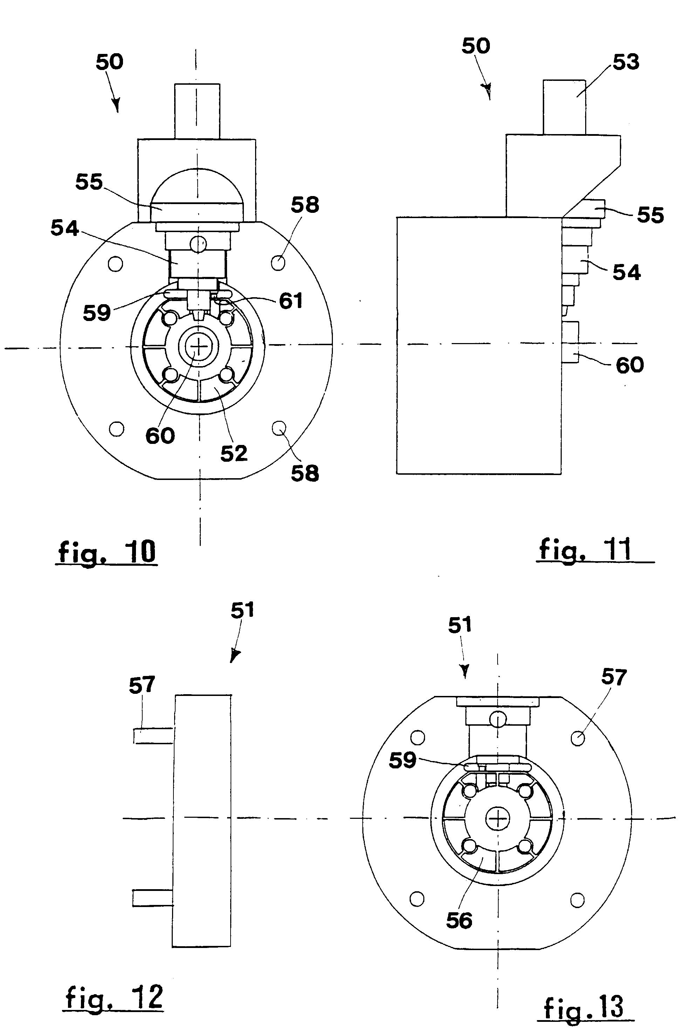

Clearly, before starting to mold the structure 11, the core 12, supported and held in a central position by the axial pin 60, is placed in the first half of the die 50. The peg 25, placed in the slot 61 (Fig. 10) fitted with the permanent magnet, thus occupies the most useful position in relation to the structure 11, as seen in Figs. I and 2.

The die is then closed by putting together the two halves 50 and 51 guided by the pegs 57.

Around the core 12 a chamber is thus created corresponding to the shape of the structure 11.

The molding process then proceeds.

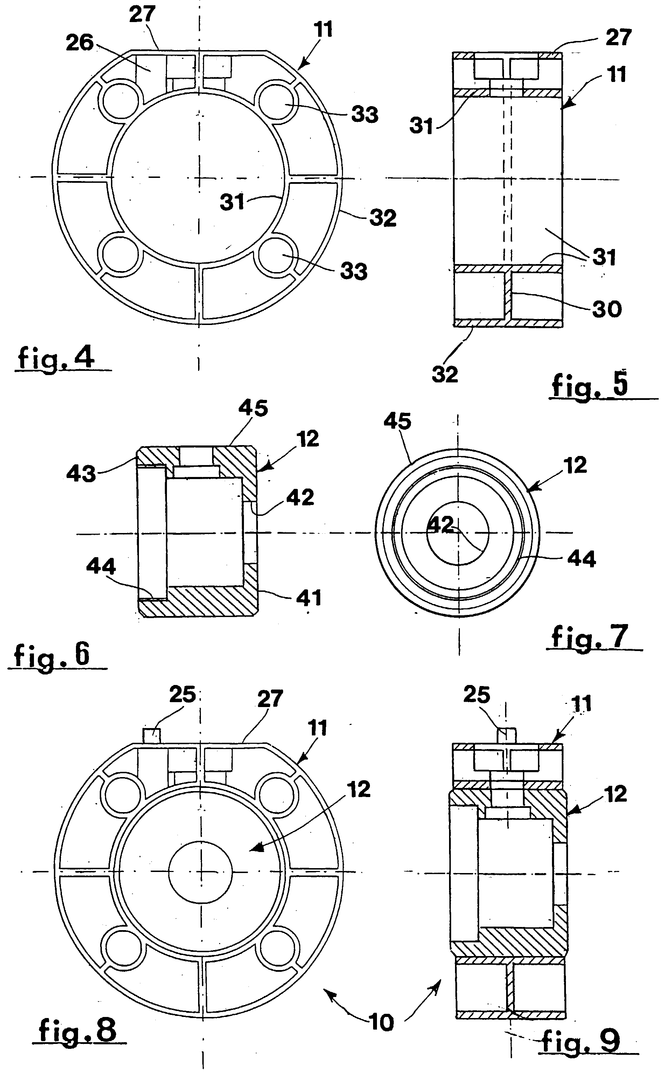

The plastic material put into the die will produce the structure 1I that tightly and centrally enfolds the core 12. On opening the die the valve body 10, illustrated in Figs. 8 and 9, complete with structure 11, core 12 and limit stop peg 25, can be lifted out.

The suitably processed surface 45 of said core 12 ensures its stable incorporation within said structure 11. Operational parts, especially the handle 14 seen in Figs. I and 2, can then be mounted to produce a valve 9 giving an excellent performance but being at the same time inexpensive and light in weight.

## Claims

1. Wafer type ball valve (9) having a flat discoid body (10), with means for combating aggressive agents in the environment and in the products in the fluids that pass through the valve and with a limit stop device (21, 25) for a lever (14) to operate the two open and closed positions,
characterized in that said body (10) consists of two component parts, a crown-shaped supporting structure (11) of plastic material produced by a molding process and a central metal core (12) to house the ball (13), stable association being obtained between said structure (11) and said core (12) by insertion of said core (12) in a die (50, 51) at the start of the molding process so that when the process is completed said core is incorporated in the structure (11).

2. Ball valve (9) as in claim 1,
characterized in that the die (50,51) used for molding is made of two matching halves (50, 51), the metal core (12) being supported and centered in one (50) of said die halves by means of a transversal pin (60) lying axially both to the die half (50) and to the core (12).

3. Ball valve (9) as in claim 1,
characterized in that the limit stop device is a metal peg (25) fixed to the top (27) of the body (10) of the valve (9) and projecting inside a fork (21), mounted on the shaft (15) which carries the operating handle (14), placed between said top (27) of the body (10) of the valve (9) and said operating handle (14), there being in one (50) of the half dies (50, 51) a slot (61) for said peg (25), said slot containing a permanent magnet, so that when said peg (25) is put in its slot (61) before the die (50, 51) is closed, at the end of molding it will be firmly associated within the structure (11) of the valve (9) and project close to the shaft (15) of the operating handle (14) to form-the limit stop to movement of said handle (14) in its end closing and opening positions.

4. Ball valve (9) as in claim 1,
characterized in that the limit stop device is a peg (25) fixed to the top (27) of the body (10) of the valve (9) and projecting inside a fork (21) fixed to the shaft (15) onto which is mounted the operating handle (14), placed between said top (27) of the body (10) of the valve (9) and said operating handle (14), said peg (25) being made all in one piece with the supporting structure (11) by means of the molding process.

5. Ball valve (9) as in claim 1,
characterized in that all the parts subjected to heaviest mechanical and chemical wear, such as the core (12) and the ball (13), are made of the materials generally used for such types of valves, especially metal materials.

6. Ball valve (9) as in claim 1,
characterized in that the supporting structure (11) is made of plastic material.

7. Ball valve (9) as in claim 1,
characterized in that the supporting structure (11) is made of different materials, as the case may be, such as ferrous metal, non-ferrous metal, thermoplastic, thermohardening plastic and any other suitable kind.

8. Ball valve (9) as in claim 1,
characterized in that the external cylindrical surface (45) of the core (12) is suitably processed to ensure maximum adhesion between said core (12) and the supporting structure (11).

9. Ball valve (9) as in claim 1,
characterized in that the thickness of the substantially discoid metal core (12) is greater than the thickness of the supporting structure (11), this too being substantially discoid, said core (12) being placed in a practically symmetrical position in relation to said structure (11) so that the lateral faces of said core (12),projecting out on either side of the structure (11), ensure direct contact between said lateral faces and the flange joining the valve to the main pipe thus making a joint of maximum reliability and strength.

10. Ball valve (9) as in claim 1,
characterized in that the supporting structure (11) virtually consists of a central laminar element (30) that joins the two coaxial, substantially cylindrical outer (30) and inner (31) faces extending perpendicually on either side of said laminar element (30) and a number of tubular elements (33) parallel to the axis, to allow passage of pins, bolts, means of connection generally with the flanges on the main pipes, thickness of said elements (30, 33) being the minimum compatible with the material used, the purpose of this being to obtain a strong structure obtainable by a quick molding process to produce a valve of minimum weight and cost.

## Patentansprüche

1. Kugelventil (9), Typ Wafer (Klemmklappe), mit flachem, scheibenförmigen Ventilgehäuse (10), mit speziellen technischen Lösungen zum Schutz gegen aggressive Einwirkungen von außen und gegen die durch die das Ventil durchströmenden Medien gegebenen aggressiven Einwirkungen sowie mit Vorrichtung (21, 25) der Endabschaltung über einen Hebel (14) zur Steuerung der Ventilöffnung und Ventilschließung, dadurch gekennzeichnet, daß das besagte Ventilgehäuse (10) aus zwei Bestandteilen, aus einem kronenförmigen tragenden Rahmen (11) aus gegossenem Kunststoff und aus einem zentralen Ventilkern (12) aus Metall, in welchem die Kugel (13) sitzt, besteht, wobei die feste Verbindung zwischen dem tragenden Rahmen (11) und dem Ventilkern (12) durch Einfügung zu Beginn des Gießvorgangs zur Fertigung des Ventilkerns (12) in eine Form (50, 51) erzielt wird, so daß der Ventilkern (12) am Ende des Gießvorgangs fest im besagten tragenden Rahmen (11) sitzt.

2. Kugelventil (9), wie unter Inanspruchnahme 1) beschrieben, dadurch gekennzeichnet, daß die Gußform (50, 51) aus zwei aufeinander gepaßten Formhälften (50, 51) besteht, wobei der Ventilkern (12) aus Metall in einer (50) der besagten Formhälften (50, 51) über einen Querstift (60) gehalten und zentriert wird, welcher achsial zur Formhälfte (50) sowie zum Kernstück (12) verläuft.

3. Kugelventil (9), wie unter Inanspruchnahme 1) beschrieben, dadurch gekennzeichnet, daß die Vorrichtung zur Endabschaltung aus einem kleinen hervorstehenden Metallzapfen (25), welcher fest mit der Spitze (27) des Gehäuses (10) des Ventils (9) verbunden ist und im Inneren mit einer kleinen Gabel (21), die fest an eine Welle (15) angeschlossen ist, auf welcher der Steuerhebel (14) aufgesetzt wird, verbunden ist, und welche sich zwischen dieser Spitze (27) des Gehäuses (10) des Ventils (9) und dem besagtem Steuerhebel (14) befindet, wobei in einer (50) der Formhälften (50, 51) ein Sitz (61) für den besagten Metallzapfen (25) angebracht ist, welcher mit einem Dauermagneten ausgestattet ist, so daß der besagte Metallzapfen (25), der vor der Schließung der Formhälften (50, 51) in den Sitz (61) eingesetzt wird, am Ende des Gießvorgangs fest mit dem besagten Rahmen (11) des Ventils (9) verbunden ist und in Höhe der Welle (15) des Steuerhebels (14) hervorsteht und somit bei Versetzung des Steuerhebels (14) in die äußeren Schließ- und Öffnungspositionen die Endabschaltung bewirkt.

4. Kugelventil (9), wie unter Inanspruchnahme 1) beschrieben, dadurch gekennzeichnet, daß die Vorrichtung zur Endabschaltung ein kleiner hervorstehender Metallzapfen (25) ist, welcher fest mit der Spitze (27) des Gehäuses (10) des Ventils (9) verbunden ist und im Inneren mit einer kleinen Gabel (21), die fest an eine Welle (15) angeschlossen ist, verbunden ist, auf welcher der Steuerhebel (14) aufgesetzt ist, und welche sich zwischen dieser Spitze (27) des Gehäuses (10) des Ventils (9) und dem besagtem Steuerhebel (14) befindet, wobei der besagte Metallzapfen (25) aus einem einzigen, kronenförmigen, abstützendem Stück besteht und über Formguß hergestellt wird.

5. Kugelventil (9), wie unter Inanspruchnahme 1) beschrieben, dadurch gekennzeichnet, daß alle Teile, die, wie der Ventilkern (12) und die Kugel (13), besonderen mechanischen oder chemischen Einwirkungen ausgesetzt sind, aus Materialien, insbesonders Metall, hergestellt sind, die in der Regel für diese Ventilart eingesetzt werden.

6. Kugelventil (9), wie unter Inanspruchnahme 1) beschrieben, dadurch gekennzeichnet, daß der tragende Rahmen (11) aus Kunststoff hergestellt wird.

7. Kugelventil (9), wie unter Inanspruchnahme 1) beschrieben, dadurch gekennzeichnet, daß der tragende Rahmen (11) je nach dem Anwendungsgebiet aus einem anderen Material hergestellt wird, wie aus eisenhaltigem Metall, nicht eisenhaltigem Metall, thermoplastischem Material, wärmehärtendem Material oder auch aus anderen geeigneten Materialien gleichwelcher Art.

8. Kugelventil (9), wie unter Inanspruchnahme 1) beschrieben, dadurch gekennzeichnet, daß die zylindrische Außenfläche (45) des Ventilkerns (12) einer besonderen Behandlung unterzogen wird, die die bestmögliche Vereinigung zwischen dem Ventilkern (12) und dem tragenden Rahmen (11) gewährleistet.

9. Kugelventil (9), wie unter Inanspruchnahme 1) beschrieben, dadurch gekennzeichnet, daß die Stärke des im Wesentlichen scheibenförmigen Ventilkerns (12) aus Metall größer ist als die Stärke des ebenfalls im Wesentlichen scheibenförmigen tragenden Rahmens (11), wobei sich der besagte Ventilkern (12) praktisch in symmetrischer Position zum tragenden Rahmen (11) befindet, so daß die Seitenwände des Ventilkerns (12) auf beiden Seiten des tragenden Rahmens (11) überstehen und somit den direkten Kontakt zwischen diesen Seitenwänden und den Anschlüssen der Rohrleitungen gewährleisten, so daß auf diese Weise die maximale Präzision und Festigkeit der Anschlüsse erzielt wird.

10. Kugelventil (9), wie unter Inanspruchnahme 1) beschrieben, dadurch gekennzeichnet, daß es sich beim tragenden Rahmen (11) im Wesentlichen um ein zentrales Metallelement (30) handelt, welches die beiden koaxialen und im Wesentlichen zylindrischen Seitenwände, das heißt die Außenwand (30) und die Innenwand (31), miteinander verbindet, welche im rechten Winkel von einer Seite zur anderen des besagten Metallelementes (30) und einigen parallel zur Achse befindlichen, rohrförmigen Elementen (33) verlaufen, um die Durchführung der Bolzenstifte, Mutterschrauben und Anschlußelemente allgemeiner Art zum Anschluß der Rohrleitungen zu gewährleisten, wobei die Wandstärke der besagten Komponenten (30 - 33) in Entsprechung zum eingesetzten Material so gering wie möglich gehalten wird, so daß über Formguß und bei minimalem Gewicht und minimalen Kosten zur Herstellung des Ventils ein robuster tragender Rahmen (11) erzielt wird.

## Revendications

1. Soupape (9) à bille du type wafer avec corps (10) plat discoïdal, comportant des solutions pour combattre l'agressivité du milieu ambiant et des produits du fluide qui la traverse et dotée d'un dispositif (21, 25) de fin de course pour les deux positions d'ouverture et de fermeture d'un levier (14) de manoeuvre, caractérisée par le fait que ce corps (10) se compose de deux éléments, une structure (11) de support en forme de couronne, fabriquée en matière plastique selon le procédé du moulage et un noyau (12) central métallique pour le logement de la bille (13), l'association stable entre cette structure (11) et ce noyau (12) étant obtenue par l'introduction dans un moule (50, 51) au début du moulage dudit noyau 12 qui se trouve ainsi, au terme du moulage, incorporé dans la structure (11).

2. Soupape (9) à bille selon la revendication 1), caractérisée par le fait que le moule (50) (51) où se fait le moulage est formé de deux demi-moules (50, 51) correspondants l'un à l'autre, le noyau (12) métallique étant supporté et centré dans l'un (50) de ces demi-moules au moyen d'une goupille (60) transversale, axiale, tant par rapport au demi-moule (50) qu'au noyau (12).

3. Soupape (9) à bille selon la revendication 1), caractérisée par le fait que le dispositif de fin de course est un téton (25) métallique solidaire du sommet (27) du corps (10) de la soupape (9) et saillant à l'intérieur d'une fourche (21), solidaire de l'arbre (15) auquel est appliqué le levier (14) de manoeuvre, placé entre ledit sommet (27) du corps (10) de la soupape (9) et le levier (14) de manoeuvre, et que, dans l'un (50) des demi-moules (50, 51), un logement (61) étant aménagé pour ce téton (25), muni d'un aimant permanent, de telle façon que ledit téton (25), introduit avant la fermeture du moule (50, 51) dans son logement (61), se trouvera, à la fin du moulage, ancré de façon stable dans la structure (11) de la soupape (9) et saillant à proximité de l'arbre (15) du levier (14) de manoeuvre pour créer un fin de course au déplacement de ce dernier (14) dans les positions extrêmes de fermeture et d'ouverture.

4. Soupape (9) à bille, selon la revendication 1), caractérisée par le fait que le dispositif de fin de course est un téton (25) solidaire du sommet (27) du corps (10) de la soupape (9), saillant à l'intérieur d'une fouche (21), solidaire de l'arbre (15) auquel est appliqué le levier (14) de manoeuvre, placé entre le sommet (27) du corps (10) de la soupape (9) et ledit levier (14) de manoeuvre, ce téton (25) formant une pièce unique avec la structure (11) de support en forme de couronne au moyen du procédé de moulage.

5. Soupape (9) à bille selon la revendication 1), caractérisée par le fait que toutes les parties sujettes aux plus fortes sollicitations mécaniques et chimiques comme le noyau (12) et la bille (13) sont construits dans les matières couramment utilisées pour ce type de soupape, en l'occurrence le métal.

6. Soupape (9) à bille selon la revendication 1), caractérisée par le fait que la structure (11) de support est construite en matière plastique.

7. Soupape (9) à bille selon la revendication 1), caractérisée par le fait que la structure (11) de support est construite dans des matériaux différents selon les cas comme les métaux ferreux, métaux non ferreux, matière thermoplastique, thermodurcissante et tout autre matériau approprié.

8. Soupape (9) à bille selon la revendication 1), caractérisée par le fait que la surface (45) cylindrique extérieure du noyau (12) est usinée de façon à assurer le maximum d'ancrage entre ce noyau (12) et la structure (11) de support .

9. Soupape (9) à bille selon la revendication 1), caractérisée par le fait que l'épaisseur du noyau (12) métallique essentiellement discoïdal, est supérieure à celle de la structure (11) de support, elle aussi essentiellement discoïdale, ce noyau (12) étant pratiquement dans une position symétrique par rapport à ladite structure (11) de façon que les parois latérales du noyau (12), saillant de part et d'autre de la structure (11), soient directement en contact avec les brides reliant aux tuyaux d'installation et cela en vue d'obtenir le maximum de précision et de solidité dans les raccordements.

10. Soupape (9) à bille selon la revendication 1), caractérisée par le fait que la structure (11) de support est essentiellement constituée d'un élément (30) laminaire central qui relie deux parois respectivement extérieure (30) et intérieure (31), coaxiales, essentiellement cylindriques, s'étendant orthogonalement de part et d'autre dudit élément (30) laminaire et de quelques éléments (33) tubulaires parallèles à l'axe, pour le passage des chevilles, des boulons, et en général des organes de liaison avec les brides des tuyaux des installations, ces éléments (30, 33) présentant l'épaisseur minimum compatible avec le matériau utilisé et ce, dans le but d'obtenir une structure (11) robuste et réalisable, grâce à un procédé de moulage rapide, avec un minimum de poids et un minimum de coût de la soupape en question.
